# EUROPEAN PATENT SPECIFICATION

(11) **EP 0 809 428 B1**
(45) Date of publication and mention of the grant of the patent: **24.05.2000**
(21) Application number: 96902357.1
(22) Date of filing: 13.02.1996
(51) Int. Cl.: A01C 23/02

(54) **IMPROVEMENTS IN OR RELATING TO APPARATUS FOR DISCHARGING SLURRIES/LIQUIDS INTO THE GROUND**
VERBESSERUNGEN AN EINEM APPARAT ZUM ABFÜHREN VON SCHLAMM/FLÜSSIGKEITEN IN DEN ERDBODEN
AMELIORATIONS SE RAPPORTANT A UN APPAREIL DE DECHARGEMENT DE BOUES/LIQUIDES DANS LE SOL

(30) Priority: 13.02.1995 GB 9502749; 27.03.1995 GB 9506166
(43) Date of publication of application: 03.12.1997
(73) Proprietor: GREENTRAC LIMITED, London EC4A 1BD (GB)
(72) Inventor: WEATHERUP, Samuel, James, Ballyclore, County Antrim BT39 9QZ (GB)
(74) Representative: Bayliss, Geoffrey Cyril
(86) International application number: GB9600317
(87) International publication number: WO9625028

(56) References cited:
- EP-A- 0 520 784
- EP-A- 0 546 974
- FR-A- 2 654 573
- FR-A- 2 689 724
- US-A- 4 596 199

## Description

This invention relates to apparatus for discharging slurries/liquids into the ground. Liquids/slurries may include animal manure slurry, liquid blood, "stick" water which is a slurry based on fish oval, bones, shell-fish waste, seaweed with a possible addition of animal blood, rancid wine and any other liquid or slurry particularly of waste products which can be beneficially applied to the ground to enhance the growth of crops thereon.

EP-A-0520784 discloses an apparatus for injecting slurry into the ground comprising a chassis, a plurality of injectors mounted on the chassis for penetrating and delivering slurry into the ground and means mounted on the chassis for feeding the ground injectors from a slurry supply, said feeding means comprising an annular chamber having an axially positioned inlet and a plurality of outlets spaced around the chamber access connected to the respective ground injectors and a rotary distribution valve in the chamber having a throughway in communication with the inlet and outlet orifice which sweeps over the chamber outlet with rotation of the valve to deliver a quantity of slurry to each outlet, the outlet orifice of the valve and the edge of each outlet from the chamber being formed to shear through any solid material passing between the orifice and an outlet as the orifice moves past the outlet to break up such material prior to passing two set injectors. Each ground injector comprises a fixed vertical blade shaped to penetrate the ground and having an integral vertically extending nozzle at its trailing end to deliver slurry into the ground at the lower end of the blade as the ground is opened up by the blade. This form of apparatus is capable of being used on a variety of forms of ground including grassland where it is necessary to inject the slurry below the root level of the grass. The force required to draw the injectors through the ground is considerable and therefore a very substantial structure is required on which the injectors are mounted to withstand the forces imposed on the injectors by the ground.

In the case of arable ground, the problem of having to inject the slurry below root level does not apply and an object of this invention is to provide a form of apparatus which is particularly suitable for delivering slurries/liquids to arable ground which may have a heavy or long stubble residue for example maize or rapeseed residue.

FR-A-2689724 discloses an apparatus for discharging slurry/liquid into the ground comprising an assembly comprising a pair of freely rotatable cutting discs mounted side by side on the assembly and diverging from one another in the direction of travel to cut narrow channels in the ground, a slurry dispensing nozzle disposed adjacent the rearward peripheries of the respective discs, the assembly further having a further pair of freely rotatable channel closing discs mounted behind the first pair of discs and angled towards one another in the direction of travel of the structure to close the slurry filled channels.

This invention provides an apparatus for discharging slurry/liquid into the ground comprising a support structure to be drawn over the ground by a towing vehicle, a ground injection assembly mounted on the support structure, the assembly comprising a pair of freely rotatable cutting discs mounted side by side on the assembly and diverging from one another in the direction of travel to cut a narrow channel in the ground, a slurry dispensing nozzle disposed adjacent the rearward peripheries of the respective discs, means on the support structure to deliver slurry to the injection nozzle, and a further pair of freely rotatable channel closing discs mounted behind the first pair of discs and angled towards one another in the direction of travel of the structure to close the slurry filled channels, wherein the support structure is an elongate structure to extend transversely to the direction of travel, a plurality of ground injection assemblies are mounted on the assembly, the ground injection assemblies include vertically pivotable swing arms on which the respective ground cutting discs, injection nozzles for the respective cutting discs and ground closure discs are mounted, each swing arm having a ground engaging wheel to control the depth of cut of the discs into the ground and spring means for biasing the arms downwardly with respect of the remainder of the support structure

Also in any of the above arrangements the support structure may have mounting means for mounting the structure on the rear of a towing vehicle for transporting the structure over the ground to which slurry/liquid is to be applied.

The following is a description of some specific embodiments of the invention, reference being made to the accompanying drawings, in which;
Figure 1 is a front view of an apparatus to be towed behind a tractor for discharging slurries/liquids into the ground;
Figure 2 is a side view of the apparatus;
Figure 3 is a plan view of the apparatus;
Figure 4 is a front view of a second form of apparatus for discharging slurries/liquids into the ground;
Figure 5 is a side view of the apparatus of Figure 4;
Figure 6 is a plan view of the apparatus of Figure 4;
Figure 7 is a detailed view of part of a swing arm arrangement of the apparatus.

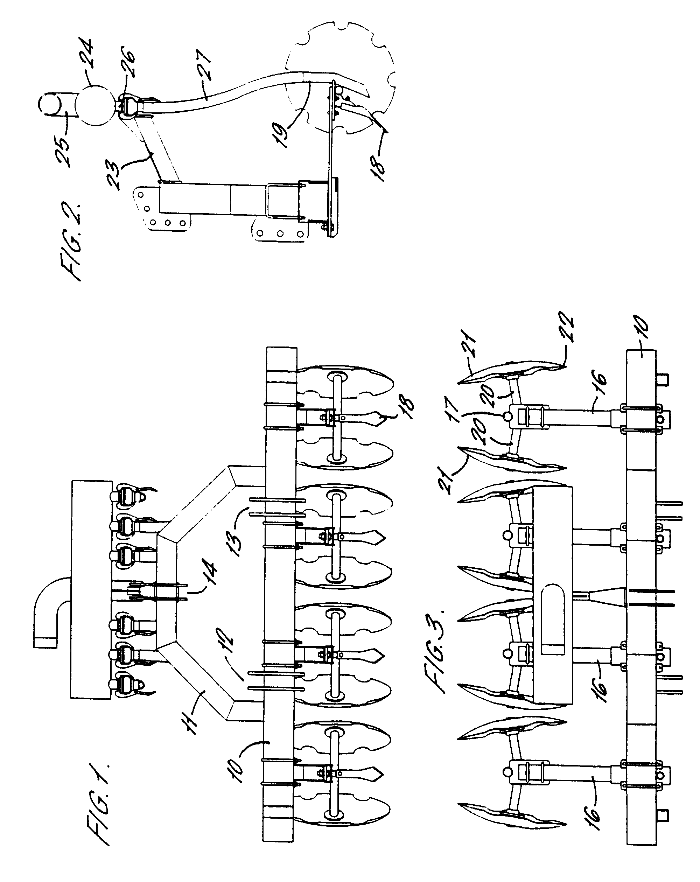

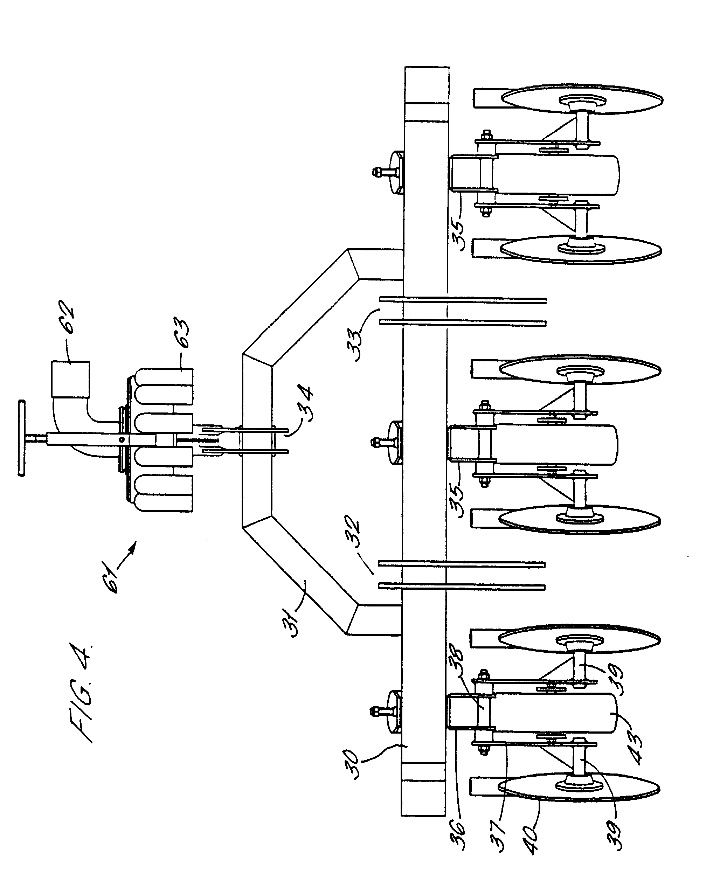

Referring now to Figures 1 to 3 of the drawings, there is shown an apparatus for mounting at the rear of a tractor to be drawn over the ground for discharging slurries/liquids onto the ground. The apparatus comprises an elongate horizontal beam 10 to extend transversely in the direction of travel of the tractor and having over the central region of the beam an upstanding arch shaped structure 11 mounted on the beam. Bracket assemblies 12 and 13 are mounted on the forward side of the beam just inside the lower ends of the arch shaped structure and a similar bracket assembly 14 is mounted at the centre of the arch for connection to standard implement mountings at the rear of the tractor.

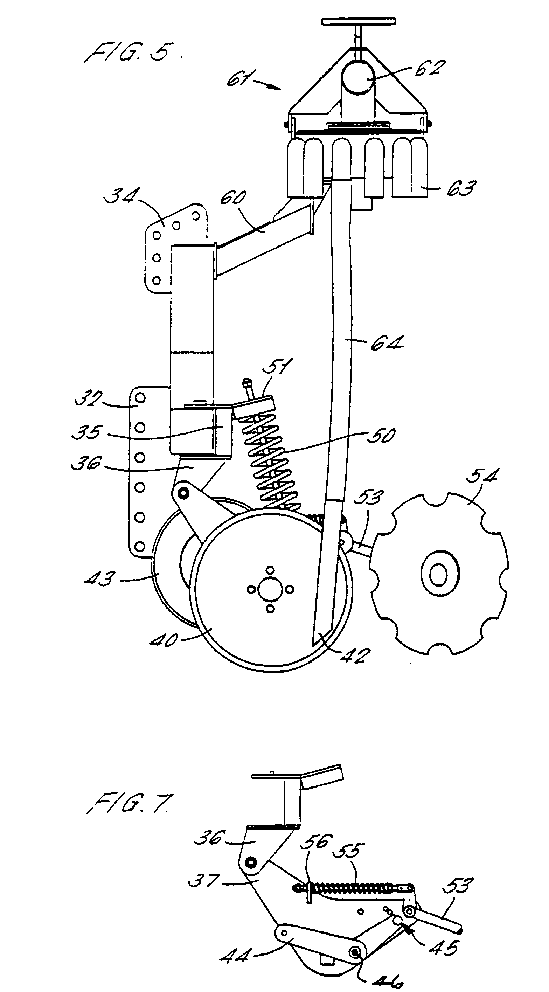

A plurality of flat trailing vertically flexible leaf springs 16 are mounted at spaced locations along the beam 10 to extend parallel to one another to the rear of the beam as best seen in Figure 3. The trailing end of each leaf spring has a bracket assembly 17 secured thereto on which there is mounted downwardly and forwardly projecting tine 18 with a pointed tip for digging into and creating a narrow channel in the ground. A downwardly open nozzle 19 is mounted on the bracket assembly immediately behind the tine connected to a supply of slurry/liquid as described below for delivering the slurry/liquid into the channel created by the tine as it is drawn through the ground. A pair of rearwardly angled stub shafts 20 project to either side of the bracket assembly and discs 21 having scalloped or serrated edges 22 are mounted for free rotation on the stub shafts. The pairs of discs mounted on the respective bracket assembly can vary towards one another in the rearward direction of the apparatus and as the apparatus is drawn over the ground, the discs engage in the ground to close up the slurry/liquid filled channels opened up by the tines 18.

A rigid strut 23 extends upwardly and rearwardly from the centre of the arch 11 and a cylindrical manifold 24 is mounted on the strut. At the centre of the upper side of the manifold there is an inlet conduit 25 for coupling to a reservoir of slurry/liquid to be discharged under the ground carried either by the tractor or on an adjacent vehicle. The underside of the manifold has a plurality of outlets 26 connected by flexible conduits 27 to the respective nozzles 19.

A new slurry is fed from an external source which may be a tanker or pipeline into the distribution manifold. The manifold provides a chamber with multiple outlets and there are no moving parts contained in the chamber. The slurry is fed through flexible hoses to the discharge nozzle 19. These nozzles direct the slurry into channels or gullies formed in the ground by the tines 18. The filled gullies are then covered with soil by the action of the tined rotating following discs 21. The entire apparatus is mounted and controlled hydraulically from the tractor or tanker. The apparatus is maintained at the required height with respect to the ground by its mounting on the vehicle and the leaf springs on which the assemblies of tines/injectors/discs are mounted enable the assemblies to follow local ground contours as the apparatus is drawn over the ground.

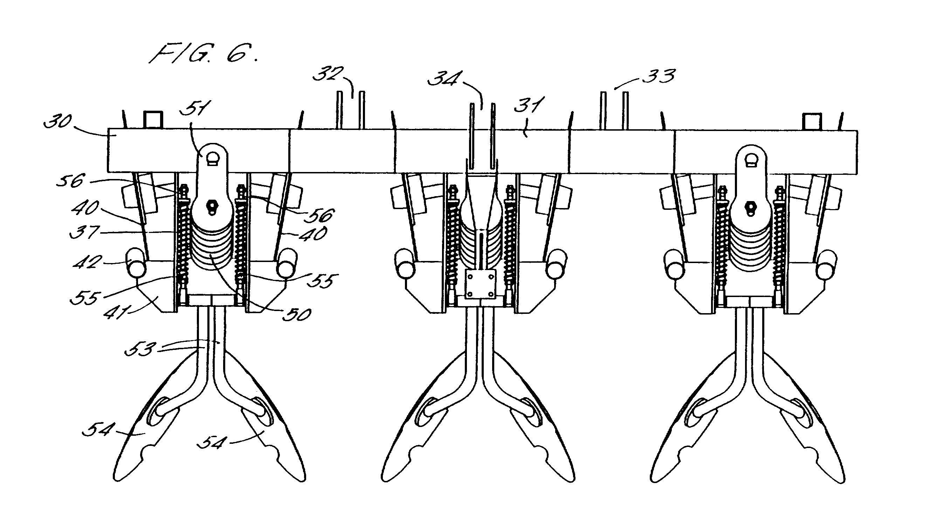

Reference is now made to the embodiment of Figures 4 to 7 of the accompanying drawings. The apparatus shown is intended primarily for use in arable conditions where heavy or long stubble residue would be encountered, e.g. maize or rapeseed residue. The apparatus comprises an elongate horizontal beam 30 to extend transversely to the tractor or other towing vehicle and having an upstanding arch 31 spanning its central region. Pairs of brackets 32, 33 are mounted on the forward side of the beam and a further bracket assembly 34 is mounted at the centre of the arch for coupling to the standard pickup arrangements on a tractor.

Three bracket assemblies indicated generally at 35 are mounted at equi spaced locations along the beam 30 with one of the assemblies being located at the centre of the beam and the other assemblies being located towards the end of the beam. Each bracket assembly includes a downwardly extending pair of lugs 36 disposed below the beam to which one end of a trailing arm comprising a pair of generally triangular shaped plates 37 is mounted at one apex thereof on a pedal pin 38. Stub shafts 39 project outwardly from each plate 37 and are angled rearwardly as best seen in Figure 6 of the drawings. Freely rotatable discs 40 at the ends of the stub shafts to engage and cut narrow channels in the ground as the apparatus is drawn over the ground.

The plates 37 have outwardly projecting horizontal brackets 41 at their rearward apices on which injection nozzles 42 are mounted adjacent the rearward peripheries of the discs 40 to dispense slurry or other liquids into the channels formed by the discs.

The level of the trailing arms 37 is controlled by a ground engaging wheel 43 mounted on an axle (not shown) supported between forks 44 pivotally mounted on the respective plates 37 with an adjustment mechanism located at 45 for adjusting the height of the axle of the wheel 43 with respect to the trailing arm and thereby adjusting the right height of the trailing arm. This in turn enables the depth to which the discs 40 cut into the ground to be adjusted.

Each trailing arm is biased downwardly by means of a coil spring unit 50 acting between a mounting 51 on the bracket 35 and a similar mounting between the pair of plates 37 of the swing arm. The coil spring provide the force required to engage the discs 40 in the ground as the apparatus is moved over the ground to the depths permitted by the wheels 43.

A pair of bell-crank levers 53 are pivotally mounted side by side at the trailing ends of plates 37. The rearward ends of the arms are angled away from each other and carry freely rotatable discs 54 to engage the ground behind the injectors 42 and close the channels formed by the first inclined discs 40. The bell-crank levers 53 are biased downwardly by compression springs 55 acting between the levers and mounting 56 on the plates 37.

At the centre of the arch 31 there is a forwardly and upwardly inclined strut 60 on which there is a rotary distribution valve 61 of the type described and illustrated in our European Patent Publication No. 0520784. The distribution valve has a drive mechanism for rotating the valve (not shown) an inlet conduit 62 for receiving a supply of slurry from a reservoir, an outlet conduit 63 connected by tubing 64 to the respective nozzles 42.

The machine operates as follows :

The inclined discs 40 create channels in the ground as the apparatus is drawn over the ground. Slurry is deposited in those channels through the nozzles 42 and the loose earth disturbed by the discs 40 is returned by the following inclined rotary discs 54 to cover over the slurry and close the original channels. Slurry is evenly distributed to each injection tube by the rotary distribution valve 61. Operating pressure required by the covering discs to enable contact with the ground is maintained by the coil springs 50. Ground engagement depth is controlled by the wheels 43 which are adjustable on the swing arms by the forks 44.

## Claims

1. An apparatus for discharging slurry/liquid into the ground comprising a support structure (30) to be drawn over the ground by a towing vehicle, a ground injection assembly mounted on the support structure, the assembly comprising a pair of freely rotatable cutting discs (40) mounted side by side on the assembly and diverging from one another in the direction of travel to cut a narrow channel in the ground, a slurry dispensing nozzle (42) disposed adjacent the rearward peripheries of the respective discs, means (61,63) on the support structure to deliver slurry to the injection nozzle, and a further pair of freely rotatable channel closing discs (54) mounted behind the first pair of discs and angled towards one another in the direction of travel of the structure to close the slurry filled channels,
characterised in that the support structure is an elongate structure (30) to extend transversely to the direction of travel, a plurality of ground injection assemblies are mounted on the assembly, the ground injection assemblies include vertically pivotable swing arms (37) on which the respective ground cutting discs (40), injection nozzles (42) for the respective cutting discs and ground closure discs (54) are mounted, each swing arm having a ground engaging wheel (43) to control the depth of cut of the discs into the ground and spring means (50) for biasing the arms downwardly with respect of the remainder of the support structure.

2. An apparatus as claimed in claim 1,
characterised in that a manifold is mounted on the support structure having an inlet conduit (62) for connection to a reservoir of slurry/liquid and a plurality of outlets connected by individual conduit means (63) to the respective nozzles (42) to deliver the slurry to the nozzles.

## Patentansprüche

1. Vorrichtung zum Austragen von Schlamm/Flüssigkeit in den Boden, welche eine von einem Schleppfahrzeug über den Boden zu ziehende Tragstruktur (30) und eine auf der Tragstruktur angebrachte Bodeninjektionsanordnung umfaßt, wobei die Anordnung umfaßt:
ein Paar frei drehbare Schneidscheiben (40), die nebeneinander an der Anordnung angebracht sind und voneinander in der Fahrtrichtung divergieren, um eine schmale Furche in den Boden zu schneiden,
eine benachbart den hinteren Umfängen der jeweiligen Scheiben angeordnete Schlammaustragsdüse (42),
ein an der Tragstruktur vorgesehenes Mittel (61, 63), um der Injektionsdüse Schlamm zuzuführen, und
ein zusätzliches Paar von frei drehbaren Furchenschließscheiben (54), die hinter dem ersten Paar von Scheiben angeordnet sind und zueinander in der Fahrtrichtung der Struktur winkelig angeordnet sind, um die schlammgefüllten Furchen zu schließen,
dadurch gekennzeichnet,
daß die Tragstruktur eine längliche, sich quer zur Fahrtrichtung erstreckende Struktur (30) ist, daß eine Mehrzahl von Bodeninjektionsanordnungen an der Anordnung angebracht sind, wobei die Bodeninjektionsanordnungen vertikal schwenkbare Schwenkarme (37) umfassen, an welchen die jeweiligen Bodenschneidscheiben (40), die Injektionsdüsen (42) für die jeweiligen Schneidscheiben und die Bodenschließscheiben (54) angebracht sind, wobei jeder Schwenkarm ein Bodeneingriffsrad (43) aufweist, um die Schnitttiefe der Scheiben in den Boden zu steuern und Federmittel (50), um die Arme bezüglich des Rests der Tragstruktur nach unten vorzuspannen.

2. Vorrichtung nach Anspruch 1, dadurch gekennzeichnet, daß ein Verteiler an der Tragstruktur angebracht ist, der eine Einlaßleitung (62) zur Verbindung mit einem Schlamm-/Flüssigkeitsreservoir aufweist und eine Mehrzahl von Auslässen, die durch einzelne Leitungsmittel (63) mit den jeweiligen Düsen (42) verbunden sind, um den Schlamm den Düsen zuzuführen.

## Revendications

1. Appareil pour décharger une boue/un liquide dans le sol, comportant une structure de support (30) destinée à être tirée sur le sol par un véhicule de remorquage, un ensemble d'injection dans le sol monté sur la structure de support, l'ensemble comportant deux disques de coupe (40) pouvant tourner librement, montés côte à côte sur l'ensemble et divergeant l'un de l'autre dans la direction de déplacement pour couper une rigole étroite dans le sol, une buse (42) de distribution de boue disposée à proximité immédiate des périphéries arrière des disques respectifs, des moyens (61, 63) situés sur la structure de support pour amener de la boue à la buse d'injection, et une autre paire de disques (54) de fermeture de rigoles, pouvant tourner librement, montés en arrière de la première paire de disques et inclinés l'un vers l'autre dans la direction de déplacement de la structure pour fermer les rigoles remplies de boue,
caractérisé en ce que la structure de support est une structure allongée (30) destinée à s'étendre transversalement à la direction de déplacement, plusieurs ensembles d'injections dans le sol sont montés sur l'ensemble, les ensembles d'injections dans le sol comprennent des bras oscillants (37) pouvant pivoter verticalement, sur lesquels les disques respectifs (40) de coupe du sol, les buses d'injection (42) pour les disques de coupe respectifs et les disques (54) de fermeture du sol sont montés, chaque bras oscillant ayant une roue (43) en contact avec le sol pour régler la profondeur de coupe des disques dans le sol et des moyens à ressorts (50) destinés à rappeler les bras vers le bas par rapport à la partie restante de la structure de support.

2. Appareil selon la revendication 1, caractérisé en ce qu'un collecteur est monté sur la structure de support, ayant un conduit d'entrée (62) pour un raccordement à un réservoir de boue/liquide et plusieurs sorties raccordées par des moyens à conduits individuels (63) aux buses respectives (42) afin d'amener la boue aux buses.
